# EUROPEAN PATENT APPLICATION

(11) **EP 4 641 536 A1**
(43) Date of publication of application: **29.10.2025**
(21) Application number: 23906867.9
(22) Date of filing: 13.12.2023
(51) Int. Cl.: G08B 17/00, G08B 25/00, H04W 56/00, H04W 84/18

(54) **ALARM SYSTEM, RELAY SYSTEM, MANAGEMENT SYSTEM, ALARM UNIT, SYNCHRONIZATION METHOD, AND PROGRAM**

(30) Priority: 22.12.2022 JP 2022206044
(71) Applicant: Panasonic Intellectual Property Management Co., Ltd., Kadoma-shi, Osaka 571-0057 (JP)
(72) Inventor: HARADA, Kenji, Kadoma-shi 571-0057 (JP); YOSHIDA, Sho, Kadoma-shi 571-0057 (JP); OHASHI, Tetsuya, Kadoma-shi 571-0057 (JP); HANAMORI, Taichi, Kadoma-shi 571-0057 (JP); HOSHIBA, Keitaro, Kadoma-shi 571-0057 (JP)
(74) Representative: Appelt, Christian W.
(86) International application number: PCT/JP2023/044725
(87) International publication number: WO 2024/135502

(57) **Abstract**

The alarm system 1000 includes a fifth fire alarm device 600e, a sixth fire alarm device 600f, and a first relay device 700a. The fifth fire alarm device 600e transmits a synchronization signal at a timing synchronized with the first relay device 700a. The sixth fire alarm device 600f is synchronized with the fifth fire alarm device 600e by receiving the synchronization signal from the fifth fire alarm device 600e. In a case where the timing synchronized with the first relay device 700a is to be corrected, the fifth fire alarm device 600e transmits the synchronization signal including information regarding correction of the synchronized timing.

## Description

### TECHNICAL FIELD

The present disclosure relates to a synchronization technique, and particularly to an alarm system, a relay system, a management system, an alarm device, a synchronization method, and a computer program using a multi-hop network.

### BACKGROUND ART

Upon detecting a fire, a fire alarm device raises an alarm. When such a fire alarm device is equipped with a communication function and communication is performed by a plurality of the fire alarm devices, if one of the fire alarm devices detects a fire, the other fire alarm devices can raise an alarm (see, for example, Patent Literature 1).

### RELATED-ART LITERATURE

### PATENT LITERATURE

Patent Literature 1: JP 2011-150492 A

### SUMMARY OF INVENTION

### TECHNICAL PROBLEM

To expand a coverage area of an alarm system including a plurality of fire alarm devices, the fire alarm devices are connected in a multi-hop manner. In a multi-hop network, a transmission delay generally becomes long. In order to shorten the transmission delay, the respective timings of the fire alarm devices are synchronized with one another. For example, in a multi-hop network, when a lower-side fire alarm device receives a synchronization signal transmitted from a higher-side fire alarm device, the lower-side fire alarm device synchronizes with the higher-side fire alarm device.

In such a configuration, when the synchronization timing is greatly shifted in any of the fire alarm devices, the transmission timing of the synchronization signal from the subject fire alarm device is also greatly shifted. When failed to receive a synchronization signal, the lower-side fire alarm device cannot maintain timing synchronization. As a result, the lower-side fire alarm device has to re-establish timing synchronization, and thus time is required to establish synchronization. Furthermore, in a case where another fire alarm device is further connected to the downstream of the lower-side fire alarm device in the multi-hop network, a similar phenomenon occurs in the other fire alarm device. As a result, more time is required to establish synchronization. In addition, when the time required to establish synchronization becomes long, time required to complete the communication of a communication signal including at least an instruction for sounding performed after synchronization may also become long.

The present disclosure has been made in view of such a situation, and the object of the present disclosure is to provide a technique that suppresses an increase in time required to establish synchronization.

### SOLUTION TO PROBLEM

In order to solve the above problem, an alarm system according to an aspect of the present disclosure includes a plurality of alarm devices included in a multi-hop network extending from a relay device. A plurality of the alarm devices include a first alarm device and a second alarm device. The first alarm device transmits a synchronization signal at a timing synchronized with the relay device, the second alarm device is synchronized with the first alarm device by receiving the synchronization signal from the first alarm device, and the first alarm device transmits a synchronization signal including information regarding correction of the synchronized timing when the timing synchronized with the relay device is to be corrected.

Another aspect of the present disclosure is an alarm device. This alarm device is an alarm device among a plurality of the alarm devices included in a multi-hop network extending from a relay device, the alarm device including a communicator configured to transmit a synchronization signal at a timing synchronized with the relay device and a synchronization controller configured to generate information regarding correction of the synchronized timing when the timing synchronized with the relay device is to be corrected. The communicator transmits the synchronization signal including the information regarding the correction of the synchronized timing.

Still another aspect of the present disclosure is a synchronization method. This method is a synchronization method in an alarm device among a plurality of the alarm devices included in a multi-hop network extending from a relay device, the synchronization method including a step of transmitting a synchronization signal at a timing synchronized with the relay device, a step of generating information regarding correction of the synchronized timing when the timing synchronized with the relay device is to be corrected, and a step of transmitting a synchronization signal including the information regarding the correction of the synchronized timing.

Optional combinations of the aforementioned constituting elements, and implementations of the present disclosure in the form of methods, apparatuses, systems, recording mediums, and computer programs may also be practiced as additional modes of the present disclosure.

### ADVANTAGEOUS EFFECTS OF INVENTION

According to the present disclosure, it is possible to suppress an increase in time required to establish synchronization.

### BRIEF DESCRIPTION OF THE DRAWINGS

[Fig. 1] Fig. 1 is a diagram illustrating a configuration of an alarm system according to the present embodiment.
[Fig. 2] Fig. 2 is a diagram illustrating a configuration of a fire alarm device in Fig. 1.
[Fig. 3] Figs. 3(a) to 3(d) are diagrams illustrating a configuration of a super frame used in the alarm system in Fig. 1.
[Fig. 4] Fig. 4 is a diagram illustrating an allocation example of time slots in the alarm system in Fig. 1.
[Fig. 5] Fig. 5 is a diagram illustrating an outline of downlink communication in the alarm system in Fig. 1.
[Fig. 6] Figs. 6(a) to 6(c) are diagrams illustrating an outline of synchronization processing in the alarm system in Fig. 1.
[Fig. 7] Figs. 7(a) and 7(b) are diagrams illustrating an outline of processing in the alarm system in Fig. 1.
[Fig. 8] Fig. 8 is a flowchart illustrating a synchronization timing correction procedure in the alarm system in Fig. 1.

### DESCRIPTION OF EMBODIMENTS

Before specifically describing the present disclosure, an outline will be described. The present embodiment relates to an alarm system installed in a facility such as an apartment building, a detached house, an office, or a hospital. In the alarm system, a relay device is connected to a management device, and a plurality of fire alarm devices are connected to the relay device by a multi-hop network. In such a network, the management device corresponds to the higher side, and the fire alarm device having the largest number of hops from the relay device corresponds to the lower side. Upon detecting occurrence of a fire, the fire alarm device transfers a detection result to the relay device, and the relay device transfers the detection result to the management device. Upon receiving the detection result, the management device selects one or more fire alarm devices caused to sound, and transmits an instruction for sounding to the selected one or more fire alarms as a final destination. The relay device and the fire alarm device transfer an instruction for sounding to the fire alarm device as the final destination. Upon receiving the instruction for sounding, the fire alarm device as the final destination performs sounding.

Here, when focusing on the fire alarm device having the largest number of hops from the relay device, if a line for a signal from the relay device to the fire alarm device is referred to as "downlink", a line for a signal from the fire alarm device to the relay device is referred to as "uplink". In the present embodiment, one frame is formed by arranging a plurality of time slots in order, and one super frame is formed by arranging a plurality of the frames in order. In addition, one fire alarm device is allocated to any one of the time slots for the downlink (hereinafter referred to as "downlink communication time slot") and to any one of the time slots for the uplink (hereinafter referred to as "uplink communication time slot"). The downlink communication time slots are used for downlink transfer, and the uplink communication time slots are used for uplink transfer.

In the downlink, in addition to an instruction for sounding, a signal (hereinafter referred to as "synchronization signal") is periodically transferred. The synchronization signal is provided for establishing and maintaining synchronization for the relay device and the fire alarm device in the multi-hop network, the synchronization allowing the relay device and the fire alarm device to transmit and receive using the time slots. Specifically, the relay device or a higher-side relay device sends a synchronization signal, and a lower-side relay device receives the synchronization signal. The lower-side relay device is synchronized with the relay device or the higher-side relay device based on the synchronization signal. The lower-side relay device transmits a synchronization signal at a synchronized timing, and a further subsequent lower-side relay device receives the synchronization signal. Such processing is repeatedly executed.

As described above, when the synchronization timing is greatly shifted in any of the fire alarm devices, the transmission timing of the synchronization signal from the subject fire alarm device is also greatly shifted. The lower-side fire alarm device beyond the fire alarm device needs to re-establish timing synchronization in order to synchronize with a synchronization signal the transmission timing of which is shifted. As a result, time required to establish synchronization is demanded. In a case where another fire alarm device is further connected to the downstream of the lower-side fire alarm device in the multi-hop network, similar processing is repeated, so that the time required to establish synchronization becomes longer.

When the deviation of the synchronization timing increases, the fire alarm device according to the present embodiment transmits information regarding the correction of the synchronized timing before changing the synchronization signal transmission timing. Upon receiving the information regarding the correction of the synchronized timing, the lower-side relay device corrects the synchronized timing. The fire alarm device in which the deviation of the synchronization timing becomes large changes the synchronized timing after transmitting the information regarding the correction of the synchronized timing. Such processing is further repeated in the lower-side fire alarm device. In the following description, the synchronization signal, the detection result, and the instruction for sounding may be collectively referred to as "communication signal".

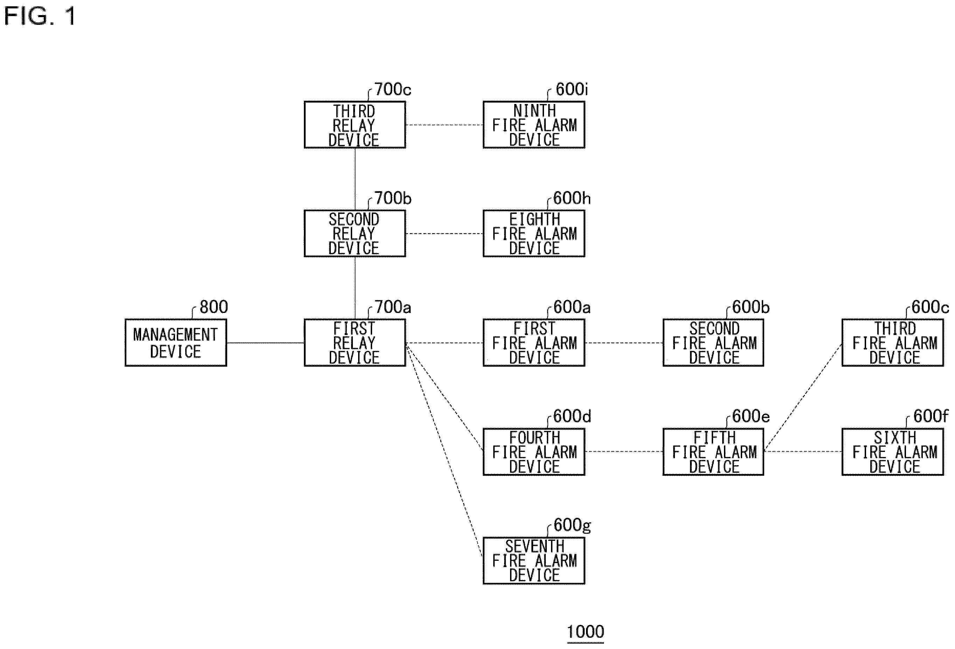

Fig. 1 illustrates a configuration of an alarm system 1000. The alarm system 1000 includes a first fire alarm device 600a to a ninth fire alarm device 600i collectively referred to as a fire alarm device 600, a first relay device 700a to a third relay device 700c collectively referred to as a relay device 700, and a management device 800. The number of the fire alarm devices 600 is not limited to "9", and the number of the relay devices 700 is not limited to "3".

The alarm system 1000 is a system that is applied to facilities such as a house, an office, and a commercial facility, detects a fire, and announces that a fire has occurred. The plurality of fire alarm devices 600 are, for example, residential fire alarm devices and each include a fire detection sensor. The plurality of fire alarm devices 600 are installed, for example, on a ceiling or the like of a facility, but may be installed on a wall or the like.

Here, the first fire alarm device 600a to the sixth fire alarm device 600f are included in a multi-hop network extending from the first relay device 700a. For example, a relay route connecting the first relay device 700a, the first fire alarm device 600a, and the second fire alarm device 600b is formed, and a relay route connecting the first relay device 700a, the fourth fire alarm device 600d, the fifth fire alarm device 600e, and the third fire alarm device 600c is formed. In addition, a relay route connecting the first relay device 700a, the fourth fire alarm device 600d, the fifth fire alarm device 600e, and the sixth fire alarm device 600f is formed, and a relay route connecting the first relay device 700a, the seventh fire alarm device 600g is formed. Such a relay route is determined by each fire alarm device 600 and is also shared with the first relay device 700a and the management device 800.

In these relay routes, the first fire alarm device 600a, the fourth fire alarm device 600d, and the seventh fire alarm device 600g can communicate with the first relay device 700a, and the number of hop counts is "1". The second fire alarm device 600b and the fifth fire alarm device 600e can communicate with the first relay device 700a, and the number of hop counts is "2". The third fire alarm device 600c and the sixth fire alarm device 600f can communicate with the first relay device 700a, and the number of hop counts is "3".

The second relay device 700b, the third relay device 700c, the eighth fire alarm device 600h, and the ninth fire alarm device 600i are configured similarly to the first relay device 700a, the first fire alarm device 600a, and the like. For example, the multi-hop network starting from the first relay device 700a is installed on the first floor of the facility, the multi-hop network starting from the second relay device 700b is installed on the second floor of the facility, and the multi-hop network starting from the third relay device 700c is installed on the third floor of the facility. The multi-hop network starting from the first relay device 700a, the multi-hop network starting from the second relay device 700b, and the multi-hop network starting from the third relay device 700c use frequencies different from each other. In addition, the first relay device 700a, the second relay device 700b, and the third relay device 700c execute wireless communication or wired communication with each other.

As described above, the relay device 700 performs wireless communication or wired communication with the plurality of fire alarm devices 600 included in the multi-hop network, and performs wireless communication or wired communication with other relay devices 700. It can also be said that the relay device 700 relays communication between the plurality of fire alarm devices 600 included in the multi-hop network. Furthermore, the first relay device 700a is connected to the management device 800 via a cable, and executes wired communication with the management device 800. The first relay device 700a and the management device 800 may execute wireless communication.

The management device 800 is, for example, a controller of a home energy management system (HEMS) installed in a facility. The management device 800 can communicate with a plurality of devices provided in the facility. The plurality of devices include, for example, an air conditioning device, a lighting device, a water heater, and the like having a communication function. In addition, the management device 800 can communicate with the first relay device 700a provided in the facility. Furthermore, the management device 800 can also communicate with the second relay device 700b, the third relay device 700c, and each fire alarm device 600 via the first relay device 700a.

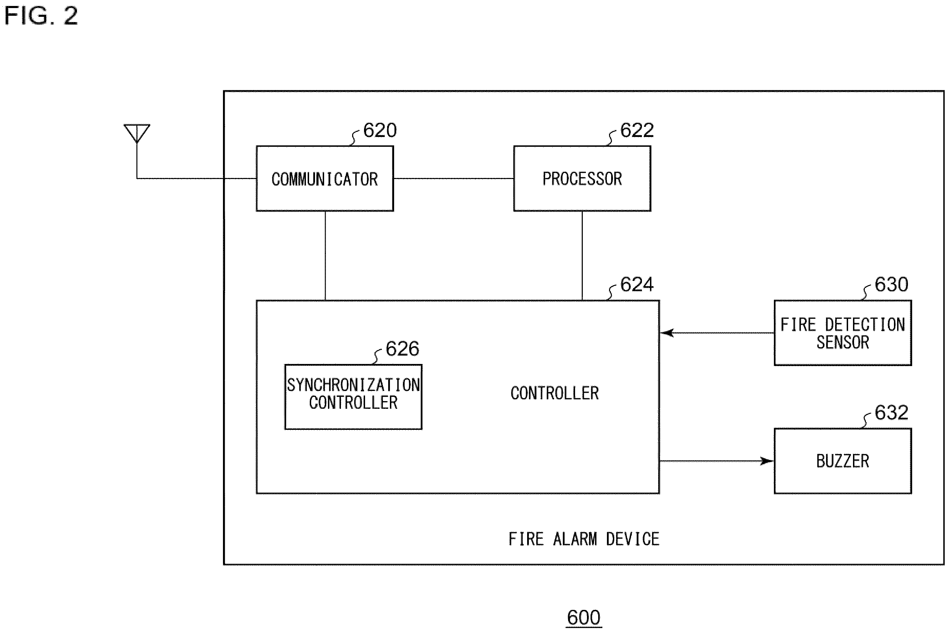

Fig. 2 illustrates a configuration of the fire alarm device 600. The fire alarm device 600 includes a communicator 620, a processor 622, a controller 624, a fire detection sensor 630, and a buzzer 632, and the controller 624 includes a synchronization controller 626. The processor 622 may be integrated with the controller 624. A known technique may be used for the fire detection sensor 630. For example, the fire detection sensor 630 may be an optical smoke detection sensor, and may detect a fire by detecting smoke at the time of a fire using diffuse reflection of light. For example, the fire detection sensor 630 may be a heat detection sensor, and may detect a fire by detecting heat at the time of a fire. For example, the fire detection sensor 630 may be a carbon monoxide detection sensor, and may detect a fire by detecting a concentration of carbon monoxide generated by combustion in a fire. For example, the fire detection sensor 630 may be an infrared detection sensor, and may detect a fire by detecting infrared rays emitted by combustion in a fire.

The communicator 620 executes wireless communication with other fire alarm devices 600 or relay devices 700. The communicator 620 may execute wired communication. The processor 622 processes a signal received by the communicator 620 and generates a signal to be transmitted from the communicator 620. The controller 624 controls the operations of the communicator 620 and the processor 622. Details of the processing of the controller 624 will be described later. The buzzer 632 is capable of sounding a buzzer sound. The fire alarm device 600 may have a configuration including the fire detection sensor 630 without including the buzzer 632, that is, a configuration having a detection function and a communication function. It can be said that such a fire alarm device 600 is a sensor capable of alarming that a fire is detected.

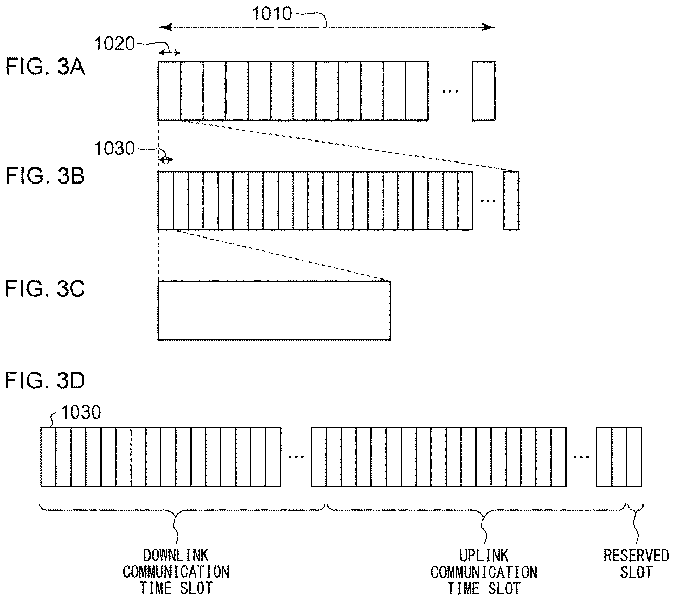

Figs. 3(a) to 3(d) are diagrams illustrating a configuration of a super frame 1010 used in the alarm system 1000. As illustrated in Fig. 3(a), a certain period of time is defined as the super frame 1010. The super frame 1010 is repeatedly arranged. The super frame 1010 is divided into a plurality of frames 1020. As illustrated in Fig. 3(b), one frame 1020 is divided into a plurality of time slots 1030. Fig. 3(c) illustrates one time slot 1030. A communication signal is transmitted in the time slot 1030. The period of the communication signal is shorter than the period of one time slot 1030.

Fig. 3(d) illustrates a use application of the plurality of time slots 1030 included in the frame 1020 illustrated in Fig. 3(b). Among the plurality of time slots 1030, one or more time slots 1030 in the head portion are used for "downlink communication time slot". One or more time slots 1030 following the downlink communication time slot are used for "uplink communication time slot". One or more time slots 1030 following the uplink communication time slot are used for "reserved slot". The number of downlink communication time slot and the number of uplink communication time slot are the same, and are equal to or larger than the number of fire alarm devices 600 included in the multi-hop network. There may be no reserved slot.

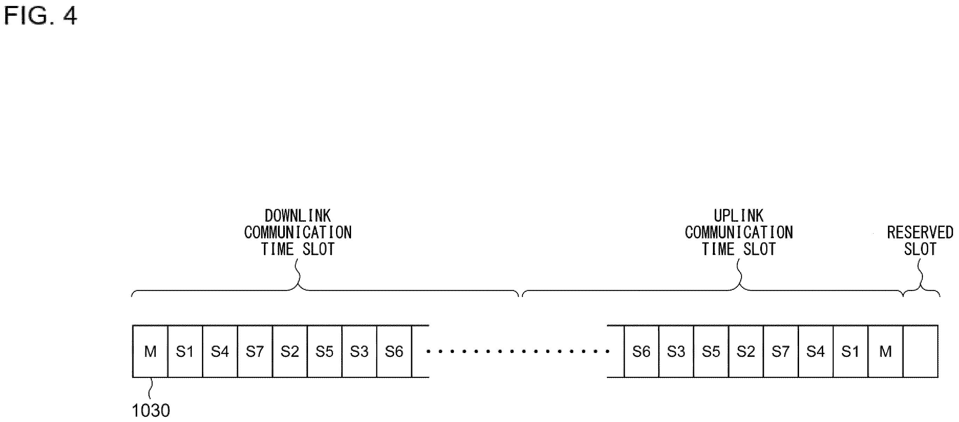

Fig. 4 illustrates an example of allocation of the time slots 1030 in the alarm system 1000 and is illustrated similar to Fig. 3(d). Fig. 4 illustrates the assignment of a plurality of time slots 1030 to the first relay device 700a, the first fire alarm device 600a to the seventh fire alarm device 600g of Fig. 1. In Fig. 4, "M" indicates the first relay device 700a, and "S1" to "S7" indicate the first fire alarm device 600a to the seventh fire alarm device 600g, respectively.

In the downlink communication time slots, the first relay device 700a, the first fire alarm device 600a, the fourth fire alarm device 600d, the seventh fire alarm device 600g, the second fire alarm device 600b, the fifth fire alarm device 600e, the third fire alarm device 600c, and the sixth fire alarm device 600f are allocated in order from the front side. As described above, the number of hops from the first fire alarm device 600a, the fourth fire alarm device 600d, or the seventh fire alarm device 600g to the first relay device 700a is "1". The number of hops from the second fire alarm device 600b or the fifth fire alarm device 600e to the first relay device 700a is "2", and the number of hops from the third fire alarm device 600c or the sixth fire alarm device 600f to the first relay device 700a is "3". That is, as the number of hops from the fire alarm device 600 to the first relay device 700a is smaller, the fire alarm device 600 is allocated to a time slot closer to the front side in the downlink communication time slots.

In the uplink communication time slots, the sixth fire alarm device 600f, the third fire alarm device 600c, the fifth fire alarm device 600e, the second fire alarm device 600b, the seventh fire alarm device 600g, the fourth fire alarm device 600d, the first fire alarm device 600a, and the first relay device 700a are allocated in order from the front side. That is, as the number of hops from the fire alarm device 600 to the first relay device 700a is larger, the fire alarm device 600 is allocated to a time slot closer to the front side in the uplink communication time slots.

When focusing on the fifth fire alarm device 600e, in the downlink communication time slots, the fifth fire alarm device 600e is allocated to a time slot behind the fourth fire alarm device 600d and in a time slot ahead of the third fire alarm device 600c and the sixth fire alarm device 600f. In the uplink communication time slots, the fifth fire alarm device 600e is allocated to a time slot behind the third fire alarm device 600c and the sixth fire alarm device 600f and in a time slot ahead of the fourth fire alarm device 600d.

The allocation of these time slots 1030 is determined by the first relay device 700a or the management device 800. For example, the first relay device 700a or the management device 800 determines allocation of the time slot 1030 on the basis of the information on the relay route. The first relay device 700a or the management device 800 notifies each fire alarm device 600 of the allocation of the determined time slot 1030. Therefore, the respective fire alarm devices 600 also grasp the allocation of these time slots 1030. As a result, the fire alarm device 600 grasps the time slot 1030 that is a time slot for transmitting a communication signal and is allocated to the fire alarm device 600. In addition, the fire alarm device 600 also grasps a time slot 1030 in which a communication signal from the adjacent fire alarm device 600 or the relay device 700 on the relay route can be received.

In such a situation, the communicator 620 of the fire alarm device 600 may execute an intermittent reception operation in order to reduce power consumption. In the intermittent reception operation in the communicator 620, the reception operation is executed in a partial period of the head portion of the time slot 1030, and when a signal (communication signal) is not received in the partial period, the reception operation stops in the remaining period of the time slot 1030. In contrast, when a signal is received in a partial period of the head portion of the time slot 1030, the reception operation is continued in the remaining period of the time slot 1030.

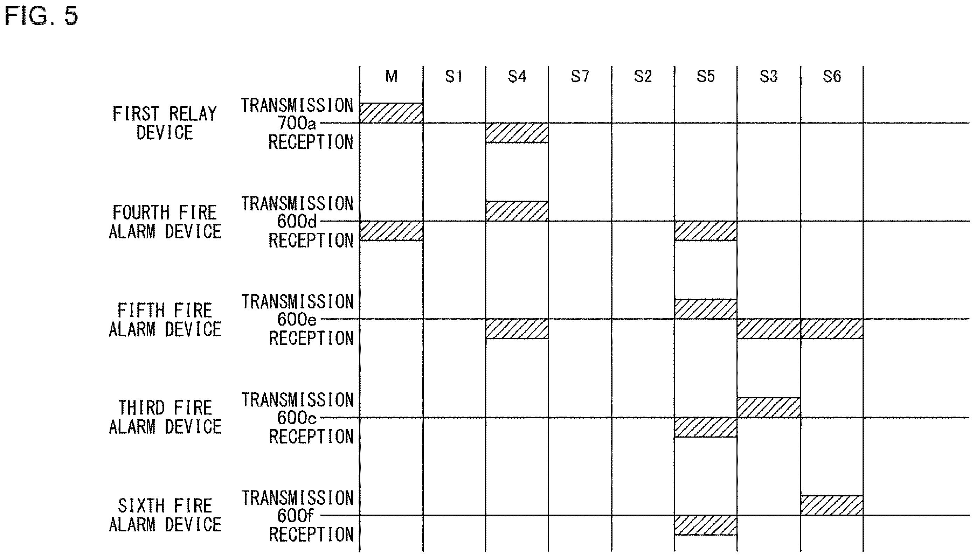

Fig. 5 illustrates an outline of downlink communication in the alarm system 1000. Fig. 5 illustrates the downlink communication time slots in Fig. 4. The first relay device 700a periodically transmits a synchronization signal to the plurality of fire alarm devices 600 included in the multi-hop network. The synchronization signal is, for example, a beacon signal. For example, the synchronization signal is transmitted in the first frame 1020 in the super frame 1010 illustrated in Fig. 3(a), and is not transmitted in the remaining frames 1020. The first relay device 700a transmits the synchronization signal in the time slot 1030 of "M" in the first frame 1020 in the super frame 1010. Upon receiving the synchronization signal in the time slot 1030 of "M", the fourth fire alarm device 600d transfers the synchronization signal in the time slot 1030 of "S4". In addition, the fourth fire alarm device 600d transmits a response signal to the first relay device 700a in the time slot 1030 of "S4". The response signal is, for example, acknowledgement (Ack). The response signal may be included in a portion of the synchronization signal.

The first relay device 700a receives the response signal in the time slot 1030 of "S4". Upon receiving the synchronization signal in the time slot 1030 of "S4", the fifth fire alarm device 600e transfers the synchronization signal in the time slot 1030 of "S5" and transmits a response signal to the fourth fire alarm device 600d. The fourth fire alarm device 600d receives the response signal in the time slot 1030 of "S5". Although not illustrated in Fig. 5, the fourth fire alarm device 600d transfers the response signal from the fifth fire alarm device 600e to the first relay device 700a in the time slot 1030 of "S4" in the next frame. The fourth fire alarm device 600d may transfer the response signal from the fifth fire alarm device 600e to the first relay device 700a in the uplink communication time slot used for uplink communication. In addition, the fourth fire alarm device 600d does not have to transfer the response signal from the fifth fire alarm device 600e to the first relay device 700a.

Upon receiving the synchronization signal in the time slot 1030 of "S5", the third fire alarm device 600c transfers the synchronization signal in the time slot 1030 of "S3" and transmits a response signal to the fifth fire alarm device 600e. Upon receiving the synchronization signal in the time slot 1030 of "S5", the sixth fire alarm device 600f transfers the synchronization signal in the time slot 1030 of "S6" and transmits a response signal to the fifth fire alarm device 600e.

The fifth fire alarm device 600e receives the response signals in the time slots 1030 of "S3" and "S6". Although not illustrated in Fig. 5, the fifth fire alarm device 600e transfers the response signal from the third fire alarm device 600c and the response signal from the sixth fire alarm device 600f to the fourth fire alarm device 600d in the time slot 1030 of "S5" in the next frame. The fourth fire alarm device 600d transfers the response signal from the fifth fire alarm device 600e to the first relay device 700a in the time slot 1030 of "S4" in the next frame. Here, an uplink communication time slot may be used for transfer of the response signal, or no response signal may be transferred.

In this manner, the synchronization signal is transferred in the frame 1020 in which the first relay device 700a has transmitted the synchronization signal. In addition, each fire alarm device 600 that has received the synchronization signal from the first relay device 700a establishes and maintains timing synchronization with the first relay device 700a based on the synchronization signal.

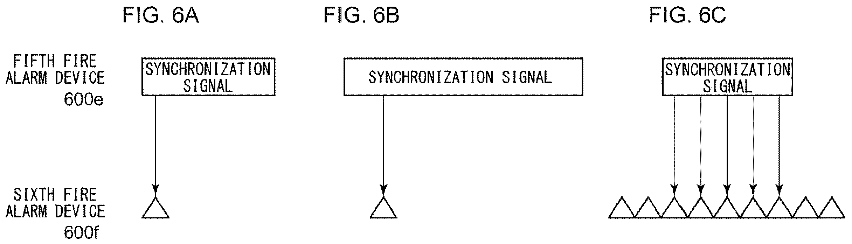

Figs. 6(a) to 6(c) are additionally used herein to describe reception processing for timing synchronization. Figs. 6(a) to 6(c) illustrate an outline of synchronization processing in the alarm system 1000. Here, as an example, a case where the fifth fire alarm device 600e in Fig. 1 transmits a synchronization signal and the sixth fire alarm device 600f receives the synchronization signal is described, but similar processing is also performed in the other fire alarm devices 600. Fig. 6(a) illustrates a synchronization signal reception timing when timing synchronization is established. The synchronization signal transmitted from the fifth fire alarm device 600e has a certain period. The sixth fire alarm device 600f executes an intermittent reception operation for a synchronization signal. In the intermittent reception operation for a synchronization signal, reception is performed in a part of a section (a portion indicated by a triangle in the drawing) of the synchronization signal.

Fig. 6(b) illustrates a synchronization signal reception timing when timing synchronization is not established. When the communication with the sixth fire alarm device 600f fails, the fifth fire alarm device 600e makes the period of the synchronization signal longer than that in Fig. 6(a) as illustrated in Fig. 6(b). This is because extending the period of the synchronization signal increases the opportunity for reception of the synchronization signal in the sixth fire alarm device 600f. By increasing the opportunity for reception of the synchronization signal in the sixth fire alarm device 600f, the sixth fire alarm device 600f can easily receive the synchronization signal, and the period until the timing is established again can be shortened.

Fig. 6(c) illustrates another synchronization signal reception timing when timing synchronization is not established. When no longer the synchronization signal is received from the fifth fire alarm device 600e, the sixth fire alarm device 600f increases the number of times of reception. This aims to increase the opportunity for reception of the synchronization signal in the sixth fire alarm device 600f. Here, by increasing the opportunity for reception, the sixth fire alarm device 600f can easily receive the synchronization signal, and the period until the timing is established again can be shortened.

The timing synchronization will be described in more detail below. As described above, the fifth fire alarm device 600e is synchronized with the fourth fire alarm device 600d by receiving the synchronization signal from the fourth fire alarm device 600d. Since the fourth fire alarm device 600d is already synchronized with the first relay device 700a, synchronizing the fifth fire alarm device 600e with the fourth fire alarm device 600d corresponds to synchronizing the fifth fire alarm device 600e with the relay device 700. As a result, the timing of the time slot 1030 from the super frame 1010 in the fifth fire alarm device 600e is adjusted to the timing of the time slot 1030 from the super frame 1010 in the relay device 700.

The fifth fire alarm device 600e transmits a synchronization signal in the time slot 1030 of "S5" at the synchronized timing. The third fire alarm device 600c and the sixth fire alarm device 600f are synchronized with the fourth fire alarm device 600d by receiving the synchronization signal from the fourth fire alarm device 600d. When another fire alarm device 600 exists on the downstream of the third fire alarm device 600c or the sixth fire alarm device 600f, the above-described processing is repeated. When timing synchronization is established, each fire alarm device 600 can receive a synchronization signal at an expected timing (time slot 1030).

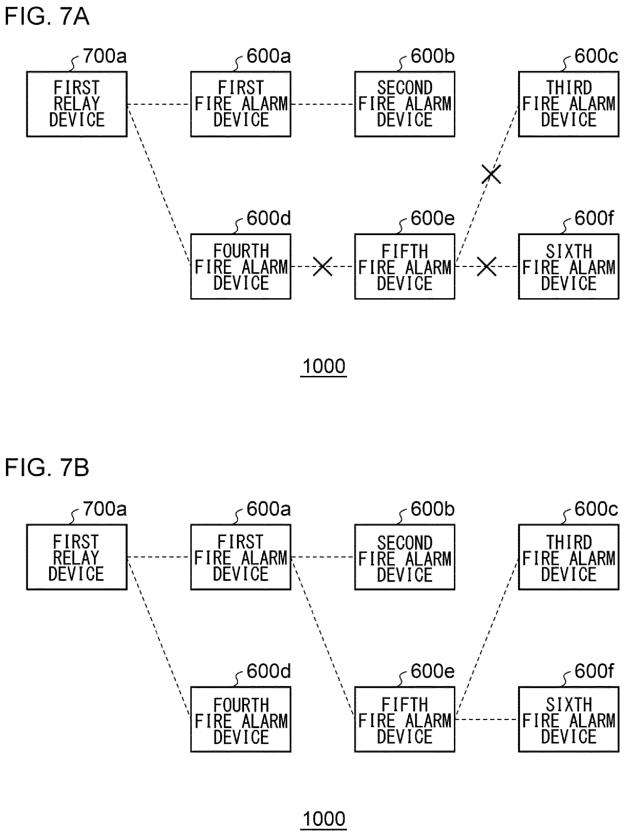

Figs. 7(a) and 7(b) illustrate an outline of processing in the alarm system 1000. Fig. 7(a) illustrates a part of the alarm system 1000 illustrated in Fig. 1. Here, a case where the fifth fire alarm device 600e cannot establish timing synchronization with the fourth fire alarm device 600d is illustrated. When timing synchronization is not established, the fifth fire alarm device 600e cannot receive a synchronization signal at an expected timing (time slot 1030).

In such a case, the fifth fire alarm device 600e re-establishes timing synchronization by attempting to receive a synchronization signal as illustrated in Figs. 6(b) and 6(c). By re-establishing the timing synchronization, the fifth fire alarm device 600e may be connected again to the fourth fire alarm device 600d (the same higher-side fire alarm device 600 as before) as illustrated in Fig. 1, or connected to the first fire alarm device 600a (the higher-side fire alarm device 600 different from before) as illustrated in Fig. 7(b).

The fifth fire alarm device 600e transmits a synchronization signal at the re-synchronized timing (time slot 1030). At this time, if the error between the timing before resynchronization and the timing after resynchronization increases, for example, if the error becomes larger than the length of the synchronization signal, the third fire alarm device 600c and the sixth fire alarm device 600f cannot receive the synchronization signal from the fifth fire alarm device 600e at the timing before resynchronization. As a result, the third fire alarm device 600c and the sixth fire alarm device 600f cannot maintain timing synchronization with the fifth fire alarm device 600e. The third fire alarm device 600c and the sixth fire alarm device 600f also have to re-establish timing synchronization by executing processing similar to that of the fifth fire alarm device 600e. When another fire alarm device 600 is connected to a side closer to the third fire alarm device 600c or the sixth fire alarm device 600f, the other fire alarm device 600 also needs processing for re-establishing timing synchronization.

By repeating such processing, the period until the timing synchronization of all the fire alarm devices 600 is re-established becomes long. As a result, communication in the entire system may delay. In addition, power consumption in the entire system may increase. Even when the timing synchronization is re-established in one fire alarm device 600, not only the fire alarm device 600, but also a lower-side fire alarm device 600 connected to the fire alarm device 600 is demanded to shorten the period required to re-establish the timing synchronization.

The synchronization controller 626 of the fifth fire alarm device 600e according to the present embodiment derives a deviation amount between the current timing and the newly detected timing. It can be said that this deviation amount is a numerical value of the difference between the synchronized timing before the correction and the synchronized timing after the correction. The synchronization controller 626 determines whether or not the deviation amount is a threshold value, for example, a length of the synchronization signal or more. In a case where the deviation amount is equal to or more than the threshold value, the synchronization controller 626 generates information (hereinafter referred to as "correction information") regarding the correction of the synchronized timing by incorporating the derived deviation amount. For example, in a case where the derived deviation amount is "1.2 ms" on the "+ (plus)" side from the current timing, the correction information is "+1200". In addition, in a case where the derived deviation amount is "2.5 ms" on the "-(minus)" side from the current timing, the correction information is "-2500". The processor 622 incorporates the correction information generated by the synchronization controller 626 into the synchronization signal. The communicator 620 transmits the synchronization signal including the correction information at the current timing. The synchronization signal including the correction information may be transmitted a predetermined number of times.

The communicator 620 of each of the third fire alarm device 600c and the sixth fire alarm device 600f receives the synchronization signal. The synchronization controller 626 acquires the correction information included in the synchronization signal. The synchronization controller 626 corrects the synchronization timing by shifting the timing by a numerical value included in the correction information. This corresponds to correcting synchronization with the fifth fire alarm device 600e. After transmitting the synchronization signal including the correction information, the synchronization controller 626 of the fifth fire alarm device 600e corrects the synchronization timing according to the deviation amount.

The synchronization controller 626 of each of the third fire alarm device 600c and the sixth fire alarm device 600f generates new correction information by adding a deviation amount derived by itself to the value indicated by the correction information from the fifth fire alarm device 600e. The communicator 620 of each of the third fire alarm device 600c and the sixth fire alarm device 600f transmits a synchronization signal including the new correction information to the other lower-side fire alarm devices 600.

The correction information does not have to be indicated by a numerical value. For example, the correction information may include a flag indicating that the synchronization timing is to be corrected. This corresponds to indicating that the synchronized timing needs to be corrected. The synchronization controller 626 of the fifth fire alarm device 600e derives a deviation amount between the current timing and the newly detected timing as is customary. The synchronization controller 626 determines whether or not a deviation amount between the current timing and the newly detected timing is a threshold value, for example, a length of the synchronization signal or more. In a case where the deviation amount is equal to or more than the threshold value, the synchronization controller 626 sets the flag in the correction information to "1". In contrast, when the deviation amount is shorter than the length of the synchronization signal, the synchronization controller 626 may set the flag in the correction information to "0", and may generate no correction information. The communicator 620 transmits the synchronization signal including the correction information at the current timing. After transmitting the synchronization signal including the correction information, the synchronization controller 626 of the fifth fire alarm device 600e corrects the synchronization timing according to the deviation amount.

The communicator 620 of each of the third fire alarm device 600c and the sixth fire alarm device 600f receives the synchronization signal. The synchronization controller 626 acquires the correction information included in the synchronization signal. When the flag included in the correction information indicates "1", the synchronization controller 626 re-establishes timing synchronization by attempting to receive a synchronization signal as illustrated in Fig. 6(c).

An apparatus, a system, or an execution subject of a method in the present disclosure includes a computer. The computer executes a computer program whereby the functions of the apparatus, the system, or the execution subject of the method in the present disclosure are implemented. The computer includes a processor that operates according to the computer program as a main hardware component. The type of the processor is not limited as long as the processor can implement the functions by executing the computer program. The processor includes one or more electronic circuits including a semiconductor integrated circuit (IC) or a large scale integration (LSI). The plurality of electronic circuits may be integrated on one chip or may be provided in a plurality of chips. The plurality of chips may be integrated into one device or may be provided in a plurality of devices. The computer program is recorded in a computer-readable non-transitory recording medium such as a ROM, an optical disk, or a hard disk drive. The computer program may be stored in advance in a recording medium, or may be supplied to a recording medium via a wide area communication network including the Internet or the like.

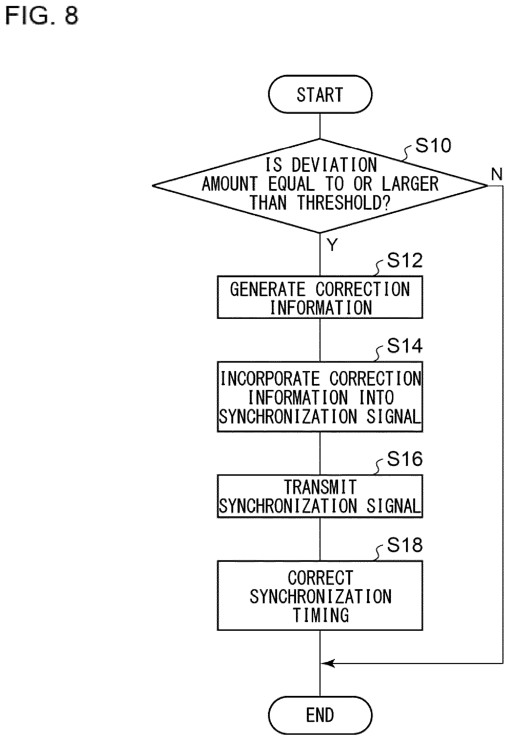

The operation of the alarm system 1000 having the aforementioned configuration will be described. Fig. 8 is a flowchart illustrating a synchronization timing correction procedure in the alarm system 1000. When the deviation amount is equal to or larger than the threshold (Y at S10), the synchronization controller 626 generates correction information (S12). The processor 622 incorporates the correction information into a synchronization signal (S14). The communicator 620 transmits the synchronization signal (S16). The synchronization controller 626 corrects synchronization timing (S18). When the deviation amount is less than the threshold (N at S10), step 12 to step 18 are omitted.

According to the present embodiment, in a case where the synchronization timing is to be corrected, the synchronization signal including the information regarding the correction of the synchronized timing is transmitted. Therefore, it is possible to prompt the lower-side fire alarm device 600 to correct the timing before the timing correction. In addition, the lower-side fire alarm device 600 is prompted to correct the timing before the timing correction, it is possible to suppress an increase in the time required to establish synchronization. In addition, an increase in the time required to establish synchronization is suppressed, and thus the time required to complete the communication of a communication signal including at least an instruction for sounding performed after synchronization can be suppressed. In addition, since the synchronized timing is corrected after transmitting the synchronization signal including the information regarding the correction of the synchronized timing, it is possible to cause the lower-side fire alarm device 600 to receive the information regarding the correction of the synchronized timing. In addition, the information regarding the correction of the synchronized timing is a value indicating a difference between the synchronized timing before the correction and the synchronized timing after the correction, and can thereby indicates the correction amount of the synchronized timing. In addition, since the information regarding the correction of the synchronized timing indicates that the synchronized timing needs to be corrected, the amount of information regarding the correction of the synchronized timing can be reduced.

An outline of one aspect of the present disclosure is as follows. In order to solve the above problem, an alarm system (1000) according to an aspect of the present disclosure includes a plurality of alarm devices (600) included in a multi-hop network extending from a relay device (700). The plurality of alarm devices (600) include a first alarm device (600) and a second alarm device (600). The first alarm device (600) transmits a synchronization signal at a timing synchronized with the relay device (700), the second alarm device (600) is synchronized with the first alarm device (600) by receiving the synchronization signal from the first alarm device (600), and the first alarm device (600) transmits a synchronization signal including information regarding correction of the synchronized timing when the timing synchronized with the relay device (700) is to be corrected.

When receiving the synchronization signal including the information regarding the correction of the synchronized timing from the first alarm device (600), the second alarm device (600) corrects synchronization with the first alarm device (600) on the basis of the information regarding the correction of the synchronized timing, and the first alarm device (600) corrects the timing synchronized with the relay device (700) after transmitting the synchronization signal including the information regarding the correction of the synchronized timing.

The information regarding the correction of the synchronized timing is a value indicating a difference between the synchronized timing before the correction and the synchronized timing after the correction.

The information regarding the correction of the synchronized timing indicates that the synchronized timing needs to be corrected.

Another aspect of the present disclosure is a relay system. The relay system includes an alarm system (1000) and a relay device (700).

Another aspect of the present disclosure is a management system. The management system includes a relay system and a management device (800) configured to communicate with a relay device (700).

Another aspect of the present disclosure is an alarm device (600). This alarm device (600) is an alarm device (600) among a plurality of the alarm devices (600) included in a multi-hop network extending from a relay device (700), the alarm device (600) including a communicator (620) configured to transmit a synchronization signal at a timing synchronized with the relay device (700) and a synchronization controller (626) configured to generate information regarding correction of the synchronized timing when the timing synchronized with the relay device (700) is to be corrected. The communicator (620) transmits the synchronization signal including the information regarding the correction of the synchronized timing.

Still another aspect of the present disclosure is a synchronization method. This method is a synchronization method in an alarm device (600) among a plurality of the alarm devices (600) included in a multi-hop network extending from a relay device (700), the synchronization method including a step of transmitting a synchronization signal at a timing synchronized with the relay device (700), a step of generating information regarding correction of the synchronized timing when the timing synchronized with the relay device (700) is to be corrected, and a step of transmitting a synchronization signal including the information regarding the correction of the synchronized timing.

The present disclosure has been described above on the basis of the embodiments. The embodiments are intended to be illustrative only and it will be understood by those skilled in the art that various modifications to their constituting elements and processes can be made and that such modifications are also within the scope of the present disclosure.

In the present embodiment, the relay device 700 connects the fire alarm devices 600 having both a fire detection function and an alarm sound issuing function. However, the present invention is not limited thereto, and for example, the fire alarm device 600 may have only the fire detection function. In addition, instead of the fire alarm devices 600, a sensor that detects a flood damage, an earthquake, gas leakage, or an occurrence of carbon monoxide (CO) due to incomplete combustion and is not limited to detecting a fire may be used. According to the present modification, the degree of freedom of the configuration can be improved.

### INDUSTRIAL APPLICABILITY

According to the present disclosure, it is possible to suppress an increase in time required to establish synchronization.

### REFERENCE SIGNS LIST

600 fire alarm device (alarm device), 620 communicator, 622 processor, 624 controller, 626 synchronization controller, 630 fire detection sensor, 632 buzzer, 700 relay device, 800 management device, 1000 alarm system

## Claims

1. An alarm system comprising
a plurality of alarm devices included in a multi-hop network extending from a relay device, wherein
a plurality of the alarm devices include a first alarm device and a second alarm device, and
the first alarm device transmits a synchronization signal at a timing synchronized with the relay device,
the second alarm device is synchronized with the first alarm device by receiving the synchronization signal from the first alarm device, and
the first alarm device transmits the synchronization signal including information regarding correction of the synchronized timing when the timing synchronized with the relay device is to be corrected.

2. The alarm system according to claim 1, wherein
when receiving the synchronization signal including the information regarding the correction of the synchronized timing from the first alarm device, the second alarm device corrects synchronization with the first alarm device on a basis of the information regarding the correction of the synchronized timing, and
the first alarm device corrects the timing synchronized with the relay device after transmitting the synchronization signal including the information regarding the correction of the synchronized timing.

3. The alarm system according to claim 1 or 2, wherein
the information regarding the correction of the synchronized timing is a value indicating a difference between the synchronized timing before the correction and the synchronized timing after the correction.

4. The alarm system according to claim 1 or 2, wherein
the information regarding the correction of the synchronized timing indicates that the synchronized timing needs to be corrected.

5. A relay system comprising: the alarm system according to claim 1; and the relay device.

6. A management system comprising: the relay system according to claim 5; and a management device structured to communicate with the relay device.

7. An alarm device among a plurality of the alarm devices included in a multi-hop network extending from a relay device, the alarm device comprising:
a communicator structured to transmit a synchronization signal at a timing synchronized with the relay device; and
a synchronization controller structured to generate information regarding correction of the synchronized timing when the timing synchronized with the relay device is to be corrected, wherein
the communicator transmits the synchronization signal including the information regarding the correction of the synchronized timing.

8. A synchronization method in an alarm device among a plurality of the alarm devices included in a multi-hop network extending from a relay device, the synchronization method comprising:
a step of transmitting a synchronization signal at a timing synchronized with the relay device;
a step of generating information regarding correction of the synchronized timing when the timing synchronized with the relay device is to be corrected; and
a step of transmitting a synchronization signal including the information regarding the correction of the synchronized timing.

9. A computer program to be executed in an alarm device among a plurality of the alarm devices included in a multi-hop network extending from a relay device, the computer program causing a computer to execute:
a step of transmitting a synchronization signal at a timing synchronized with the relay device;
a step of generating information regarding correction of the synchronized timing when the timing synchronized with the relay device is to be corrected; and
a step of transmitting a synchronization signal including the information regarding the correction of the synchronized timing.
